# EUROPÄISCHE PATENTSCHRIFT

(11) **EP 1 426 224 B1**
(45) Veröffentlichungstag und Bekanntmachung des Hinweises auf die Patenterteilung: **12.07.2006**
(21) Anmeldenummer: 03024265.5
(22) Anmeldetag: 23.10.2003
(51) Int. Cl.: B60K 13/02

(54) **Einrichtung zur Rohluftansaugung für eine Brennkraftmaschine**
Air intake system for an IC engine
Dispositif d'admission d'air pour un moteur à combustion

(30) Priorität: 07.12.2002 DE 10257299
(43) Veröffentlichungstag der Anmeldung: 09.06.2004
(73) Patentinhaber: Dr.Ing. h.c. F. Porsche Aktiengesellschaft, 70435 Stuttgart (DE)
(72) Erfinder: Storz, Eberhard, 74366 Kirchheim (DE); Keller, Markus, 71229 Leonberg-Höfingen (DE)

(56) Entgegenhaltungen:
- CH-A- 337 365
- GB-A- 2 110 174
- JP-A- 54 148 922
- US-A- 4 533 012
- US-A1- 2003 042 055
- PATENT ABSTRACTS OF JAPAN vol. 1996, no. 01, 31. Januar 1996 (1996-01-31) -& JP 07 243357 A (SUZUKI MOTOR CORP), 19. September 1995 (1995-09-19)
- PATENT ABSTRACTS OF JAPAN vol. 2000, no. 25, 12. April 2001 (2001-04-12) -& JP 2001 221113 A (KAWASAKI HEAVY IND LTD), 17. August 2001 (2001-08-17)
- PATENT ABSTRACTS OF JAPAN vol. 2002, no. 11, 6. November 2002 (2002-11-06) -& JP 2002 211252 A (NISSAN MOTOR CO LTD), 31. Juli 2002 (2002-07-31)
- PATENT ABSTRACTS OF JAPAN vol. 1998, no. 13, 30. November 1998 (1998-11-30) -& JP 10 213033 A (SUZUKI MOTOR CORP), 11. August 1998 (1998-08-11)

## Beschreibung

Die Erfindung bezieht sich auf eine Einrichtung zur Rohluftansaugung für eine Brennkraftmaschine nach dem Oberbegriff des Anspruchs 1.

Insbesondere bei Geländefahrzeugen hat sich als Problem herausgestellt, daß die für den Motor von außen angesogene Verbrennungsluft bei Geländefahrt mit Schmutzwasser, Schnee, Sand und dgl. Fremdmittel bzw. Fremdmedien angereichert einem Luftfilter zugeführt wird. Hierdurch wird die Zuführung von Rohluft zum Luftfilter erschwert bzw. kann sich der Luftfilter zusetzen. Aus der gattungsgemäßen JP-A-07-243357 ist eine Einrichtung zur Rohluftansaugung in einem Boot bekannt, welche im Bug angeordnet ist und einen abgeschlossenen Luftstauraum umfasst, der vorderseitig eine Eintrittsöffnung aufweist und im Inneren ein abgestelltes Bauteil als Labyrinth für anzusaugende Rohluft aufweist und in einer inneren Begrenzungswand zum Motorraum hin eine Austrittsöffnung für die Rohluft in den Motorraum aufweist. Des Weiteren ist aus der US-A-4,533,012 eine sogenannte Zick-Zack-Route für den der Brennkraftmaschine bzw. den Luftfilter zuzuführenden Luftstrom im Bug eines Kraftfahrzeugs vorgesehen. Damit die Luft keinen Schnee, Wasser oder Sand mit sich führt, ist der Luftführungsweg von außen nach innen mit Abweismitteln versehen. Nach Überwindung dieser Abweismittel wird der Luftstrom über Leitungen zum Luftfilterelement geführt.

Zur Lösung dieses Problems ist nach der Erfindung eine Einrichtung vorgesehen, welche diese Nachteile vermeidet und eine von Anreicherungen freie Rohluft dem Luftfiltergehäuse zuführbar ist.

Dies wird nach der Erfindung durch die Merkmale des Anspruchs 1 gelöst. Weitere vorteilhafte Merkmale beinhalten die Unteransprüche.

Die mit der Erfindung hauptsächlich erzielten Vorteile bestehen darin, daß über den abgekapselten Luftstauraum eine Vorabscheidung für Wasser, Schnee, Schmutz und dgl. erfolgt, damit nur reine Rohluft in einen Ansaugstutzen eines Luftfiltergehäuses eingeleitet wird. Dies wird erreicht, indem mindestens ein Ansaugstutzen eines Luftfiltergehäuses in einem gekapselten Luftstauraum der Einrichtung einmündet, der vorderseitig von einer Bugverkleidung und rückseitig von einer anschließenden gewölbten Raumbegrenzungswand zum Motorraum hin abgeschlossen ist. In dieser ist im Bodenbereich mindestens eine Lufteintrittsöffnung vorgesehen, die mit den Lufteinlaßöffnungen im Bug des Fahrzeugs in Verbindung steht.

Insbesondere sind die Ansaugstutzen jeweils am freien Ende von einem elastischen Formteil umgeben, das dicht anliegend zur gewölbtem Raumbegrenzungswand und zu einer Bugverkleidung angeordnet ist. Hierdurch wird eine stirnseitige Abdichtung des Luftstauraumes zum Motorraum hin erzielt, so daß die zugeführte Luft vollständig dem Luftfiltergehäuse zugeleitet werden kann.

Damit die Luftzuführung ohne wesentliche Verluste in den Luftstauraum erfolgt, sind die Lufteintrittsöffnungen unmittelbar angrenzend zu den Lufteinlaßöffnungen im Bug des Fahrzeugs angeordnet. Desweiteren ist nach der Erfindung vorgesehen, daß die gewölbte Raumbegrenzungswand mit einer Tangentialebene unter einem spitzen Winkel zu einer horizontalen Fahrzeugebene angeordnet ist und daß die Lufteintrittsöffnungen - in Bezug auf die Fahrtrichtung - im Vorderbereich der Raumbegrenzungswand bzw. im Boden der Raumbegrenzungswand und mit einem Höhenabstand unmittelbar benachbart zur Mündungsöffnung des Ansaugstutzens angeordnet sind. Somit können Verunreinigungen abgeschieden und sich im unteren Raumbereich absetzen, da die Mündungsöffnung des Ansaugstutzen bzw. der Ansaugstutzen höher als die Lufteintrittsöffnungen in der Raumbegrenzungswand angeordnet sind. Gleichzeitig kann die Außenfläche der gewölbten Raumbegrenzungswand des gekapselten Luftstauraumes als Luftleitfläche für Kühlluft zu einem Kühlermodul verwendet werden.

Die Lufteintrittsöffnungen können auch mit einem Sieb, einer Klappe oder dgl. versehen sein, damit wesentliche Verunreinigungen in der zugeführten Luft schon anfangs herausgesiebt, abgeschieden bzw. abgehalten werden.

Ein Ausführungsbeispiel der Erfindung ist in den Zeichnungen dargestellt und wird im folgenden näher beschrieben.

Es zeigen
- Fig. 1: eine schaubildliche Darstellung auf einen Stauraum unter Weglassung der Bugverkleidung mit Ansaugstutzen,
- Fig. 2: eine schaubildliche Darstellung auf einen mit einem elastischen Formteil verbundenen Ansaugstutzen eines Luftfiltergehäuses,

- Fig. 3: einen Querschnitt durch einen im Bug des Fahrzeugs angeordneten Luftstauraum und
- Fig. 4: einen weiteren Querschnitt durch den Luftstauraum mit Ansaugstutzen und Kühlermodul.

Im Bug 1 eines Fahrzeugs ist ein gekapselter Luftstauraum 2 angeordnet, der außen von einer Bugverkleidung 3, innen von einer gewölbten Raumbegrenzungswand 4 und an beiden Stirnseiten 5, 6 von einem elastischen Formteil 7 zum Motorraum 8 hin dicht abgeschlossen ist.

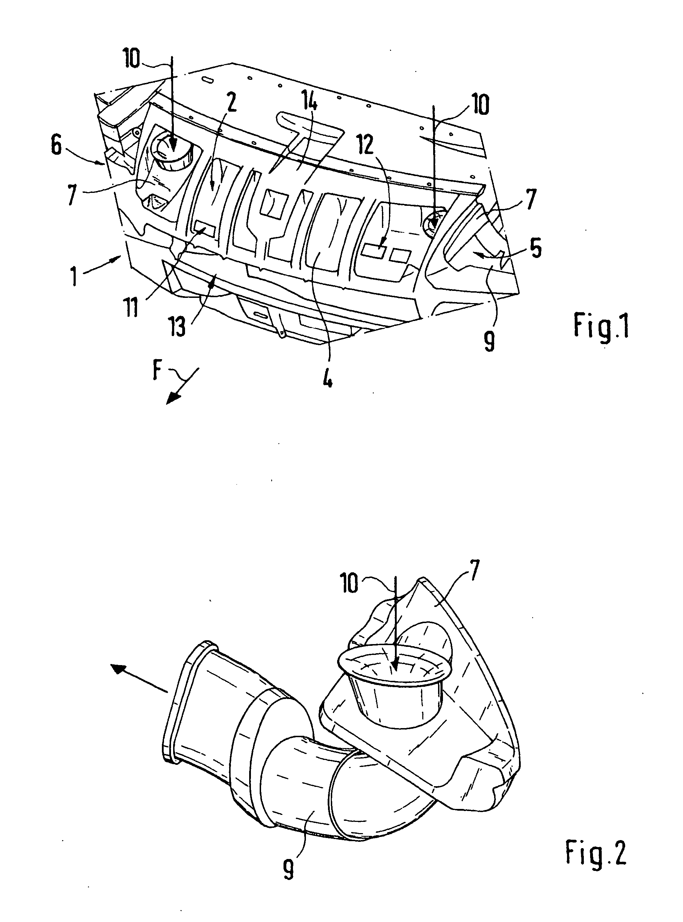

In den Luftstauraum 2 mündet mindestens ein Ansaugstutzen 9 für Rohluft eines Luftfiltergehäuses 10 ein, der im Formteil 7 gehalten und endseitig dicht umschlossen ist, wie insbesondere Fig. 2 näher zeigt.

Die Raumbegrenzungswand 4 ist nach innen zum Motorraum 8 hin gewölbt ausgebildet und eine Tangentialebene Y-Y der Raumbegrenzungswand 4 ist unter einem spitzen Winkel α zu einer Horizontalebene X-X des Fahrzeugs angestellt.

In der Raumbegrenzungswand 4 sind - in Bezug auf die Fahrtrichtung F - wenigstens im vorderen Bereich der Raumbegrenzungswand 4 Lufteintrittsöffnungen 11 vorgesehen. Diese sind mit einem Höhenabstand h und benachbart zur Mündungsöffnung 12 des Ansaugstutzens 9 für Rohluft angeordnet. Im Bugteil 3 sind Lufteinlaßöffnungen 13 vorgesehen, die einen Luftstrom 14 zu den Lufteintrittsöffnungen 11 der Raumbegrenzungswand 4 in den Luftstauraum 2 leiten.

In Fig. 1 ist dieser Raum 2 in schaubildlicher Darstellung näher gezeigt, wobei zur Haltung der Bugverkleidung 3 ein gitterförmiges Tragteil 14 vorgesehen ist, welches aber vollständig von der Bugverkleidung 3 abgedeckt wird.

Der durch die Lufteinlaßöffnungen 13 eintretende Luftstrom 14 beaufschlagt auch ein Kühlermodul 15, das - in Bezug auf die Fahrtrichtung F - hinter dem Luftstauraum 2 angeordnet ist, wobei die gewölbte Raumbegrenzungswand 4 als Luftleitfläche dient.

Die Lufteintrittsöffnungen 11 bzw. 12 können auch durch Siebe, Klappen oder dgl. Mittel abgedeckt sein, damit Schnee, Sand, Wasser und sonstige Fremdmittel nicht oder nur teilweise in den Raum 2 eintreten können.

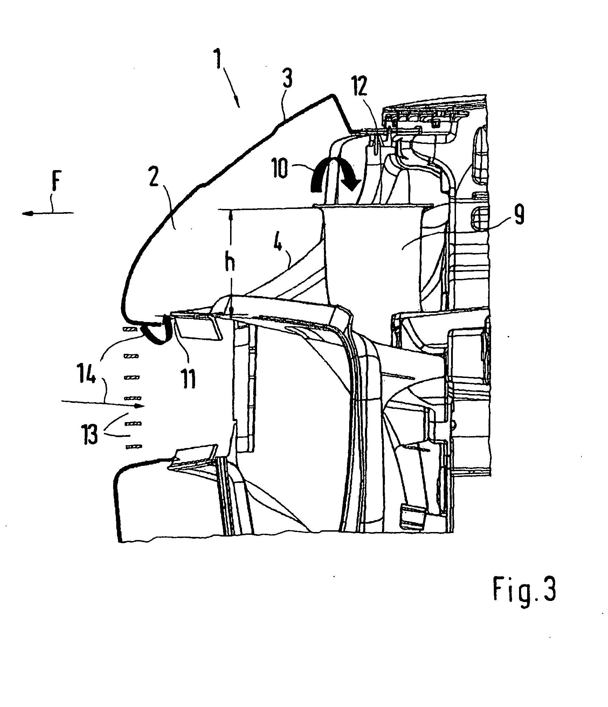

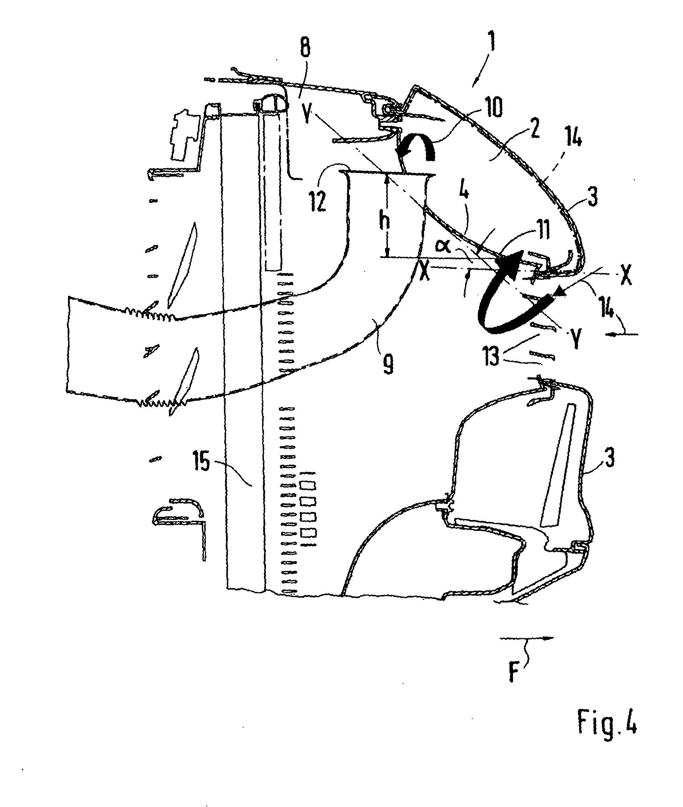

Wie insbesondere in den Fig. 3 und 4 zu erkennen ist, strömt die Luft 14 über die Lufteinströmöffnungen 13 im Bug 1 des Fahrzeugs ein und ein Teilluftstrom fließt zum Kühlermodul 15 und ein weiterer Teilluftstrom fließt durch die Lufteintrittsöffnungen 11 in den Luftstauraum 2 ein, wie die Pfeile zeigen. Die beispielsweise bei Geländefahrt mitgerissenen Fremdkörper bzw. Fremdmittel werden aufgrund der höher als die Lufteintrittsöffnungen 11 angeordneten Mündungsöffnungen 12 der Ansaugstutzen 9 abgesondert bzw. abgeschieden und gelangen somit nicht in das Luftfiltergehäuse.

## Patentansprüche

1. Einrichtung zur Rohluftansaugung für eine Brennkraftmaschine über einen in einem Gehäuse (10) angeordneten Luftfilter, wobei die Einrichtung im Bug eines Fahrzeugs angeordnet ist, und mit bugseitigen Lufteinlassöffnungen (13) in Verbindung steht, wobei ein Ansaugstutzen (9) eines Luftfiltergehäuses in einen rundum gekapselten Luftstauraum (2) der Einrichtung einmündet, welcher vorderseitig von einer Bugverkleidung (3) und rückseitig von einer anschließenden Raumbegrenzungsward (4) zum Motorraum (8) des Fahrzeugs hin abgeschlossen ist und wobei im Bodenbereich der Raumbegrenzungswand (4) mindestens eine Lufteintrittsöffnung (11) bzw. (12) angeordnet ist, die mit den Lufteinlaßöffnungen (13) im Fahrzeugbug in verbindung steht , **dadurch gekennzeichnet, dass** die Raumbegrenzungswand (4) gewölbt ausgeführt ist und mit einer Tangentialebene (Y-Y) unter einem spitzen Winkel (α) zu einer horizontalen Fahrzeugebene (X-X) angeordnet ist und die Lufteintrittsöffnungen (11) - in Bezug auf die Fahrtrichtung (F) - im vorderen Bereich der Raumbegrenzungswand (4), mit einem Höhenabstand (h) tiefer als die mundengsöffnung (12) des Ansaugstutzens (9) und unmittelbar benachbart zu dieser angeordnet sind.

2. Einrichtung nach Anspruch 1, **dadurch gekennzeichnet, daß** der Ansaugstutzen (9) jeweils am freien Ende von einem elastischen Formteil (7) umgeben ist, das dicht anliegend zur gewölbtem Raumbegrenzungswand (4) und zu einer Bugverkleidung (3) angeordnet ist und stirnseitige Abdichtungen des Luftsautraumes (2) bilden.

3. Einrichtung nach den Ansprüchen 1 oder 2, **dadurch gekennzeichnet, daß** die Lufteinlassöffnungen (11) bzw. (12) angrenzend zu den bugseitigen Lufteintrittsöffnungen (13) angeordnet sind.

4. Einrichtung nach den Ansprüchen 1, 2 oder 3, **dadurch gekennzeichnet, daß** eine Außenfläche der gewölbten Raumbegrenzungswand (4) des gekapselten Luftstauraumes (2) als Luftleitfläche für Kühlluft zu einem Kühlermodul (15) verwendet wird.

## Claims

1. A system for the raw-air intake of an internal-combustion engine via an air filter arranged in a housing (10), wherein the system is arranged in the front end of a vehicle and communicates with front-end air inlet openings (13), wherein an intake pipe (9) of an air-filter housing opens into a fully enclosed air storage chamber (2) of the system, which chamber (2) is closed at the front by a front-end covering (3) and at the rear by an adjoining chamber boundary wall (4) in the direction of the engine compartment (8) of the vehicle, and wherein at least one air admission opening (11) or (12) is arranged in the bottom region of the chamber boundary wall (4) and communicates with the air inlet openings (13) in the vehicle front end, **characterised in that** the chamber boundary wall (4) is curved and is arranged with a tangential plane (Y-Y) at an acute angle (α) to a horizontal vehicle plane (X-X), and the air admission openings (11) - in relation to the direction of travel (F) - are arranged in the forward region of the chamber boundary wall (4) so as to be lower than the mouth (12) of the intake pipe (9) by a height (h) and so as to be directly adjacent to the mouth (12).

2. A system according to claim 1, **characterised in that** each intake pipe (9) is surrounded at its free end by a resilient moulded part (7) which is arranged so as to lie tightly against the curved chamber boundary wall (4) and a front-end covering (3) and forms end seals for the air storage chamber (2).

3. A system according to claim 1 or claim 2, **characterised in that** the air admission openings (11) and (12) are arranged adjacent to the front-end air inlet openings (13).

4. A system according to claim 1, 2 or 3, **characterised in that** an outer surface of the curved chamber boundary wall (4) of the enclosed air storage chamber (2) is used as an air deflector for deflecting cooling air towards a radiator module (15).

## Revendications

1. Dispositif d'aspiration d'air brut pour un moteur à combustion interne par l'intermédiaire d'un filtre à air disposé dans un boîtier (10), le dispositif étant disposé dans la partie avant d'un véhicule et étant raccordé à des ouvertures de prise d'air placées du côté avant (13), une tubulure d'aspiration (9) d'un boîtier de filtre à air débouchant dans un compartiment de stockage d'air (2) complètement encapsulé du dispositif, qui est obturé par rapport au compartiment (4) de moteur (8) du véhicule à l'avant par un habillage de la partie avant (3) et à l'arrière par une paroi de limitation de compartiment (4) et au moins une ouverture d'admission d'air (11) ou (12), qui communique avec les ouvertures de prise d'air (13) à l'avant du véhicule, étant disposée dans la zone de fond de la paroi de limitation de compartiment (4), **caractérisé en ce que** la paroi de limitation de compartiment (4) a une forme bombée et est disposée avec un plan tangentiel (Y-Y) selon un angle aigu (α) par rapport à un plan horizontal du véhicule (X-X) et les ouvertures d'admission d'air (11) - par rapport au sens d'avancement (F) - sont disposées dans la zone avant de la paroi de limitation de compartiment (4) avec un espacement vertical (h) plus bas que l'embouchure (12) de la tubulure d'aspiration (9) et directement à côté de celle-ci.

2. Dispositif selon la revendication 1, **caractérisé en ce que** la tubulure d'aspiration (9) est entourée à l'extrémité libre par une pièce moulée élastique (7) qui s'appuie de manière étanche sur la paroi de limitation de compartiment bombée (4) et sur un habillage à l'avant (3) et forme les étanchéités frontales du compartiment de stockage d'air (2).

3. Dispositif selon les revendications 1 ou 2, **caractérisé en ce que** les ouvertures de prise d'air (11) ou (12) sont adjacentes aux ouvertures d'admission d'air (13) du côté avant.

4. Dispositif selon les revendications 1, 2 ou 3, **caractérisé en ce qu'**une surface extérieure de la paroi de limitation de compartiment bombée (4) du compartiment de stockage d'air encapsulé (2) est utilisée comme surface stabilisatrice d'air pour l'air de refroidissement dirigé vers un module de refroidissement (15).
